# EUROPEAN PATENT APPLICATION

(11) **EP 4 113 437 A1**
(43) Date of publication of application: **04.01.2023**
(21) Application number: 22177516.6
(22) Date of filing: 07.06.2022
(51) Int. Cl.: G06T 7/00

(54) **METHOD AND SYSTEM FOR DETECTING DAMAGES IN FREIGHT CONTAINER**

(30) Priority: 02.07.2021 FI 20215780
(71) Applicant: Visy Oy, 33100 Tampere (FI)
(72) Inventor: HUTTUNEN, Heikki, 33100 Tampere (FI); HAKALA, Joona, 33100 Tampere (FI); SELINUMMI, Jyrki, 33100 Tampere (FI)
(74) Representative: Kolster Oy Ab

(57) **Abstract**

A method of detecting damages in a freight container, comprising capturing a first image of a part of the freight container at an angle deviating from a perpendicular direction in respect of the part of the container, capturing a second image of the same part of the container at an angle substantially perpendicular in respect of the same part of the container, analysing the first and second images for detecting a damage in the part of the container, and in response to detecting the damage in the part of the container providing a damage information image regarding to the part of the container, the damage information image being an image based on the second image regarding to the respective part of the container and including damages detected in at least one of the respective first image or this second image.

Also, a system for detecting damages in a freight container.

## Description

### FIELD OF THE INVENTION

The invention relates to a method of and a system for detecting damages in a freight container.

### BACKGROUND OF THE INVENTION

Various freight containers may be used for transporting goods, equipment or raw materials. Freight containers, which are typically 20 to 53 feet long, represent a typical example of freight containers. Freight containers are handled for example in various ports or in railway or truck terminals where they are moved for instance from a ship directly onto a train or a truck or vice versa, or to a storage area of the port or terminal for intermediate storing.

Problems with the handling of freight containers may take place with containers that have been damaged or even broken in various ways. If the cargo contained in the container has moved, the container may comprise e.g., deformations, or the structures of the container may have broken in response to impacts exerted thereon. Said damages in the container may have been brought about for instance during transportation of the container or while loading or unloading it sometime earlier. While being handled, such damaged containers may constitute a danger to their environment for instance as a result of the cargo or the entire container or parts thereof falling, which is why it should be possible to be able to detect the damaged containers so as to enable, when necessary, the handling of such a container to be planned in advance to take place in a safe manner, or to enable the container to be prevented from further moving along in the transport chain.

In some terminals, it is possible in connection with loading and unloading containers to employ staff reserved for the purpose for detecting damages in the container prior to moving the container. In large terminals, owing to the enormous number of containers to be handled and incessant demands for efficiency placed on the transport chain, it is in practice often impossible for the staff in the terminal to inspect all containers, however.

### BRIEF DESCRIPTION OF THE INVENTION

An object of the present invention is to provide a novel method and a novel system for detecting damages in a freight container.

The invention is characterized by the features of the independent claims.

The invention is based on the idea of capturing or taking images of at least one part of the freight container at different angles in respect of the at least one part of the freight container by different image capturing units for detecting different kind of damages in the at least one part of the freight container, i.e., to detect damages being detectable at different viewing angles in respect of the part of the freight container. The damages detected in the images captured at different viewing angles from the same part of the freight container are combined into one image from the same part of the freight container to easily visualize the damages in the respective part of the freight container.

The solution provides a way to detect various damages in the freight container, including damages being detectable only in the image captured at the angle deviating from the perpendicular direction in respect of the part of the freight container as well as damages being detectable only in the image captured at the angle substantially perpendicular in respect of the same part of the freight container.

Some embodiments of the invention are disclosed in the dependent claims.

### BRIEF DESCRIPTION OF THE DRAWINGS

In the following the invention will be described in greater detail by means of preferred embodiments with reference to the accompanying drawings, in which
Figure 1 shows schematically a freight container;
Figure 2 shows schematically a part of a system for detecting damages in a freight container as seen from above of a freight container;
Figure 3 shows schematically a part of a system for detecting damages in a freight container as seen from a rear end of a freight container;
Figure 4 shows schematically an embodiment of a system for detecting damages in a freight container;
Figure 5 shows schematically an embodiment of a method of detecting damages in a freight container; and
Figures 6 to 8 show schematically a practical example of detecting damages in a freight container.

For the sake of clarity, the figures show some embodiments of the invention in a simplified manner. Like reference numerals identify like elements in the figures.

### DETAILED DESCRIPTION OF THE INVENTION

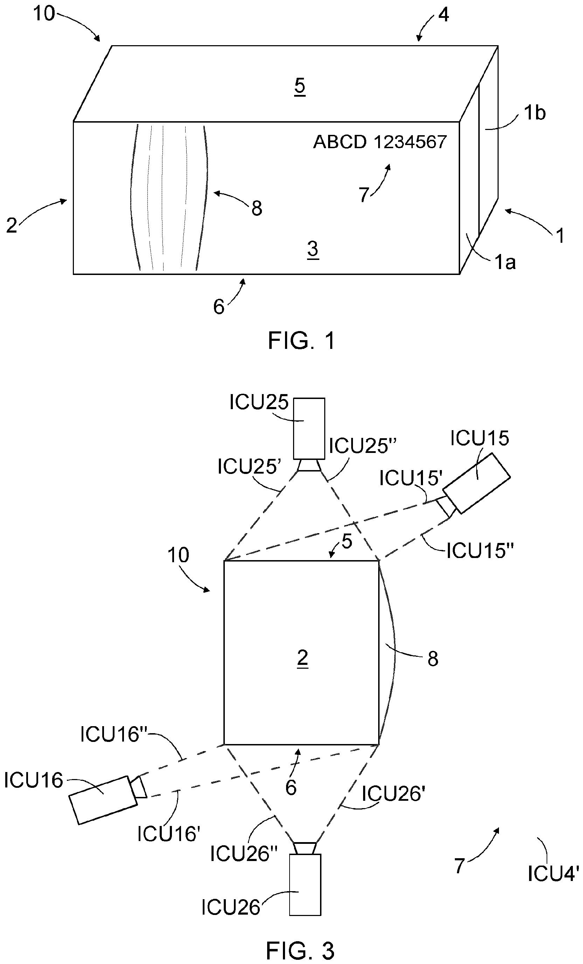

Figure 1 schematically shows a freight container 10. The freight container 10 of Figure 1 comprises a first end wall 1, i.e., a front wall 1, provided with openable container doors 1a, 1b, the first end wall 1 thus forming a front end of the freight container 10. The container 10 further comprises at an opposite end thereof a second end wall 2, i.e., a rear wall 2, which forms a rear end of the freight container 10. The container 10 further comprises long side walls, i.e., a first side wall 3 and a second side wall 4, which form side structures of the container connecting the front wall 1 and the rear wall 2 to each other. The container 10 further comprises a roof 5 forming a top structure of the container 10, and a bottom 6 forming a bottom structure of the container 10. The freight container 10 shown in Figure 1 is a typical transport container used for shipment of goods or equipment by sea, but also being applicable to be transported by train or by truck. The freight container may also be a container of a different kind from that shown in Figure 1, such as a tank container, used for transporting liquids or powders. The freight containers are typically 20 to 53 feet long. The containers may also vary in height and width.

The freight containers are provided with a container code 7, typically on each wall 1, 2, 3, 4 and the roof 5 of the container 1. For the sake of clarity, Figure 1 shows the container code 7 provided only on the first side wall 3 of the container 10. Such container codes 7 are used in terminals for monitoring and identifying containers. A container code is one possible example of an individualization identifier of a container to individualize and identify each individual container, the container code typically comprising the following information on the container: owner code (commonly known as BIC code), equipment class identifier, serial number, inspection number, and size and type codes of the container. In the side and end walls of the container 10, the container codes 7 are typically provided at the top right-hand corner. The container code 7 shown in Figure 1 is horizontal, but it may also be vertical. The container codes may have one, two, three and four row(s). The container code 7 may be applied for determining a transport route travelled by a specific container and/or its location at each time.

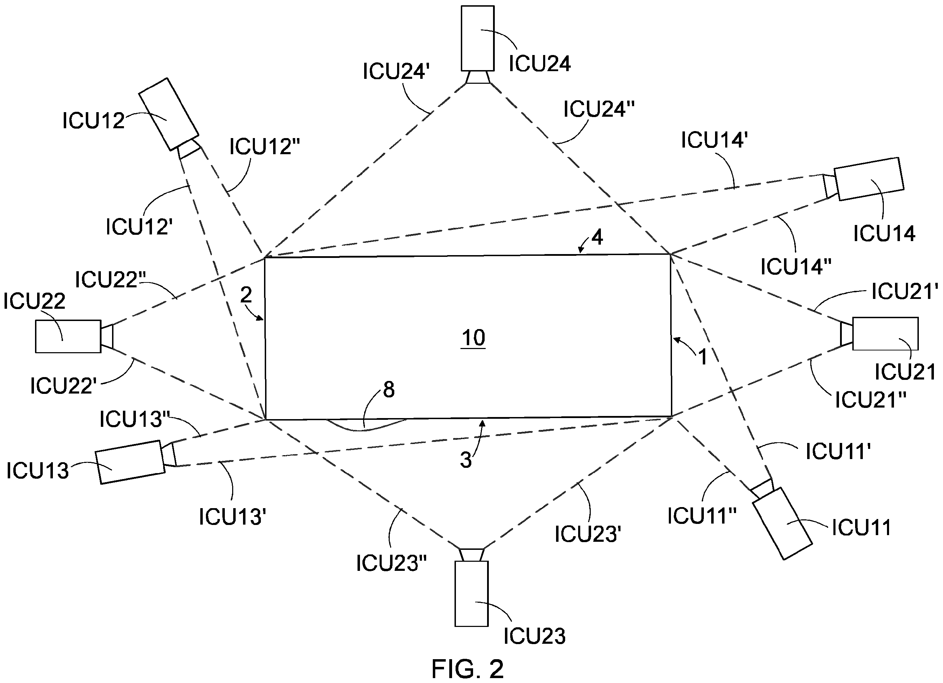

Figure 2 shows schematically a part of a system for detecting damages in the freight container 10 as seen from above of the freight container 10, and Figure 3 shows schematically a part of the system for detecting damages in the freight container 10 as seen from the rear end of the freight container 10. Said damages include for instance a bump 8 or protrusion 8 shown very schematically on the first side wall 3 of the freight container 10 in Figure 1.

The system for detecting damages in the freight container 10 comprises at least one first image capturing unit, i.e., one or more first image capturing units. Each first image capturing unit is arranged to capture or take at least one first image of at least one part of the freight container 10 at an angle deviating from a perpendicular direction, i.e., deviating from a right angle, in respect of the respective at least one part of the freight container 10. The system for detecting damages in the freight container 10 further comprises at least one second image capturing unit, i.e., one or more second image capturing units. The at least one second image capturing unit is arranged to capture or take at least one second image of the same at least one part of the freight container 10 as the respective at least one first image capturing unit but at an angle substantially perpendicular, i.e., at a substantially right angle, in respect of the respective part of the freight container 10. The part of the freight container 10 refers in Figures 1, 2 and 3 to one of the first end wall 1, the second end wall 2, the first side wall 3, the second side wall 4, the roof 5, or the bottom 6 of the freight container 10.

The embodiment of the system of Figures 2 and 3 comprises an image capturing unit ICU11 arranged or configured to capture, i.e., to take, at least one image IM11 of the first end wall 1 of the freight container 10 at an angle that deviates from the perpendicular direction in respect of the first end wall 1 of the freight container 1. Sides of a viewing angle of the image capturing unit ICU11 in respect of the freight container 10 are shown schematically in Figure 2 with broken lines denoted with reference signs ICU11' and ICU11".

The embodiment of the system of Figures 2 and 3 further comprises an image capturing unit ICU12 arranged or configured to capture, i.e., to take, at least one image IM12 of the second end wall 2 of the freight container 10 at an angle that deviates from the perpendicular direction in respect of the second end wall 2 of the freight container 10. Sides of a viewing angle of the image capturing unit ICU12 in respect of the freight container 10 are shown schematically in Figure 2 with broken lines denoted with reference signs ICU12' and ICU12".

The embodiment of the system of Figures 2 and 3 further comprises an image capturing unit ICU13 arranged or configured to capture, i.e., to take, at least one image IM13 of the first side wall 3 of the freight container 10 at an angle that deviates from the perpendicular direction in respect of the first side wall 3 of the freight container 10. Sides of a viewing angle of the image capturing unit ICU13 in respect of the freight container 10 are shown schematically in Figure 2 with broken lines denoted with reference signs ICU13' and ICU13".

The embodiment of the system of Figures 2 and 3 further comprises an image capturing unit ICU14 arranged or configured to capture, i.e., to take, at least one image IM14 of the second side wall 4 of the freight container 10 at an angle that deviates from the perpendicular direction in respect of the second side wall 4 of the freight container 10. Sides of a viewing angle of the image capturing unit ICU14 in respect of the freight container 10 are shown schematically in Figure 2 with broken lines denoted with reference signs ICU14' and ICU14".

The embodiment of the system of Figures 2 and 3 further comprises an image capturing unit ICU15 arranged or configured to capture, i.e., to take, at least one image IM15 of the roof 5 of the freight container 10 at an angle that deviates from the perpendicular direction in respect of the roof 5 of the freight container 10. Sides of a viewing angle of the image capturing unit ICU15 in respect of the freight container 10 are shown schematically in Figure 3 with broken lines denoted with reference signs ICU15' and ICU15".

The embodiment of the system of Figures 2 and 3 further comprises an image capturing unit ICU16 arranged or configured to capture, i.e., to take, at least one image IM6 of the bottom 6 of the freight container 10 at an angle that deviates from the perpendicular direction in respect of the bottom 6 of the freight container 10. Sides of a viewing angle of the image capturing unit ICU16 in respect of the freight container 10 are shown schematically in Figure 3 with broken lines denoted with reference signs ICU16' and ICU16".

The image capturing units ICU11, ICU12, ICU13, ICU14, ICU15, ICU16 form or provide a set of first image capturing units ICU11, ICU12, ICU13, ICU14, ICU15, ICU16 which are arranged to capture, i.e., to take, at least one respective image IM11, IM12, IM13, IM14, IM15, IM16 of the respective part of the freight container 10 at an angle deviating from the perpendicular direction in respect of the respective part of the freight container 10, i.e., at a non-perpendicular angle in respect of the respective part of the freight container 10. The one or more images captured from the part of the freight container 10 by the respective first image capturing unit form or provide a set of first images IM11, IM12, IM13, IM14, IM15, IM16 captured from the respective part of the freight container 10.

In the example of Figures 2 and 3, for the sake of clarity, the viewing angle of each first image capturing unit ICU11, ICU12, ICU13, ICU14, ICU15, ICU16 is adapted or arranged to contain only the part of the freight container 10 corresponding to the specific first image capturing unit ICU11, ICU12, ICU13, ICU14, ICU15, ICU16. In practice, however, the viewing angle of each first image capturing unit ICU11, ICU12, ICU13, ICU14, ICU15, ICU16 is typically arranged to contain a larger view, i.e., also areas around the respective part of the freight container 10, whereby the at least one first image IM11, IM12, IM13, IM14, IM15, IM16 taken by the respective first image capturing unit ICU11, ICU12, ICU13, ICU14, ICU15, ICU16 typically also contains areas around the respective part of the freight container 10. Therefore, the at least one first image IM11, IM12, IM13, IM14, IM15, IM16 taken by the respective first image capturing unit ICU11, ICU12, ICU13, ICU14, ICU15, ICU16 may also contain a view of two different parts, i.e., the view of two parts of the set of four walls, roof, or bottom of the freight container 10 at an angle that deviates from the perpendicular direction in respect of those parts of the freight container 10.

As said above, the at least one first image capturing unit ICU11, ICU12, ICU13, ICU14, ICU15, ICU16 is arranged to capture or take at least one first image IM11, IM12, IM13, IM14, IM15, IM16 of the respective at least one part of the freight container 10 at the angle that deviates from the perpendicular direction in respect of the respective at least one part of the freight container 1, i.e., at the angle deviating from the right angle in respect of the respective at least one part of the freight container 10. In other words, an orientation of the at least one first image capturing unit ICU11, ICU12, ICU13, ICU14, ICU15, ICU16, or the orientation of the viewing angle of the at least one first image capturing unit, is not arranged to be perpendicular in respect of the respective at least one part of the freight container 10 to be imaged but at an angle that deviates from the perpendicular direction in respect of the respective at least one part of the freight container 10. The angle of orientation of the first image capturing unit ICU11, ICU12, ICU13, ICU14 relative to the part of the freight container 10 to be imaged may for example be 5° - 80°, preferably 10° - 45°, whereas the perpendicular direction or an angle substantially perpendicular in respect of the part of the freight container 10 is defined to substantially correspond to the right angle, i.e., the angle of 90° degrees, in respect of the part of the freight container 10. Consequently, a parallel direction in respect of the part of the freight container 10 is defined to substantially correspond to the angle of 0° in respect of the part of the freight container 10.

The embodiment of the system of Figures 2 and 3 further comprises an image capturing unit ICU21 arranged or configured to capture, i.e., to take, at least one image IM21 of the first end wall 1 of the freight container 10 at an angle substantially perpendicular in respect of the first end wall 1 of the freight container 1. Sides of a viewing angle of the image capturing unit ICU21 in respect of the freight container 10 are shown schematically in Figure 2 with broken lines denoted with reference signs ICU21' and ICU21".

The embodiment of the system of Figures 2 and 3 further comprises an image capturing unit ICU22 arranged or configured to capture, i.e., to take, at least one image IM22 of the second end wall 2 of the freight container 10 at an angle substantially perpendicular in respect of the second end wall 2 of the freight container 10. Sides of a viewing angle of the image capturing unit ICU22 in respect of the freight container 10 are shown schematically in Figure 2 with broken lines denoted with reference signs ICU22' and ICU22".

The embodiment of the system of Figures 2 and 3 further comprises an image capturing unit ICU23 arranged or configured to capture, i.e., to take, at least one image IM23 of the first side wall 3 of the freight container 10 at an angle substantially perpendicular in respect of the first side wall 3 of the freight container 10. Sides of a viewing angle of the image capturing unit ICU23 in respect of the freight container 10 are shown schematically in Figure 2 with broken lines denoted with reference signs ICU23' and ICU23".

The embodiment of the system of Figures 2 and 3 further comprises an image capturing unit ICU24 arranged or configured to capture, i.e., to take, at least one image IM24 of the second side wall 4 of the freight container 10 at an angle substantially perpendicular in respect of the second side wall 4 of the freight container 10. Sides of a viewing angle of the image capturing unit ICU24 in respect of the freight container 10 are shown schematically in Figure 2 with broken lines denoted with reference signs ICU24' and ICU24".

The embodiment of the system of Figures 2 and 3 further comprises an image capturing unit ICU25 arranged or configured to capture, i.e., to take, at least one image IM25 of the roof 5 of the freight container 10 at an angle substantially perpendicular in respect of the roof 5 of the freight container 10. Sides of a viewing angle of the image capturing unit ICU25 in respect of the freight container 10 are shown schematically in Figure 3 with broken lines denoted with reference signs ICU25' and ICU25".

The embodiment of the system of Figures 2 and 3 further comprises an image capturing unit ICU26 arranged or configured to capture, i.e., to take, at least one image IM26 of the bottom 6 of the freight container 10 at an angle substantially perpendicular in respect of the bottom 6 of the freight container 10. Sides of a viewing angle of the image capturing unit ICU26 in respect of the freight container 10 are shown schematically in Figure 3 with broken lines denoted with reference signs ICU26' and ICU26".

The image capturing units ICU21, ICU22, ICU23, ICU24, ICU25, ICU26 form or provide a set of second image capturing units ICU21, ICU22, ICU23, ICU24, ICU25, ICU26 which are arranged to capture, i.e., to take, at least one respective image IM21, IM22, IM23, IM24, IM25, IM26 of the respective part of the freight container 10 at an angle substantially perpendicular in respect of the respective part of the freight container 10. The one or more images captured from the part of the freight container 10 by the respective second image capturing unit form or provide a set of second images IM21, IM22, IM23, IM24, IM25, IM26 captured from the respective part of the freight container 10.

In the example of Figures 2 and 3, for the sake of clarity, the viewing angle of each second image capturing unit ICU21, ICU22, ICU23, ICU24, ICU25, ICU26 is adapted or arranged to contain only the part of the freight container 10 corresponding to the specific second image capturing unit ICU21, ICU22, ICU23, ICU24, ICU25, ICU26. In practice, however, the viewing angle of each second image capturing unit ICU21, ICU22, ICU23, ICU24, ICU25, ICU26 is typically arranged to contain a larger view, i.e., also areas around the respective part of the freight container 10, whereby the at least one second image IM21, IM22, IM23, IM24, IM25, IM26 taken by the respective second image capturing unit ICU21, ICU22, ICU23, ICU24, ICU25, ICU26 typically also contains areas or surroundings around the respective part of the freight container 10.

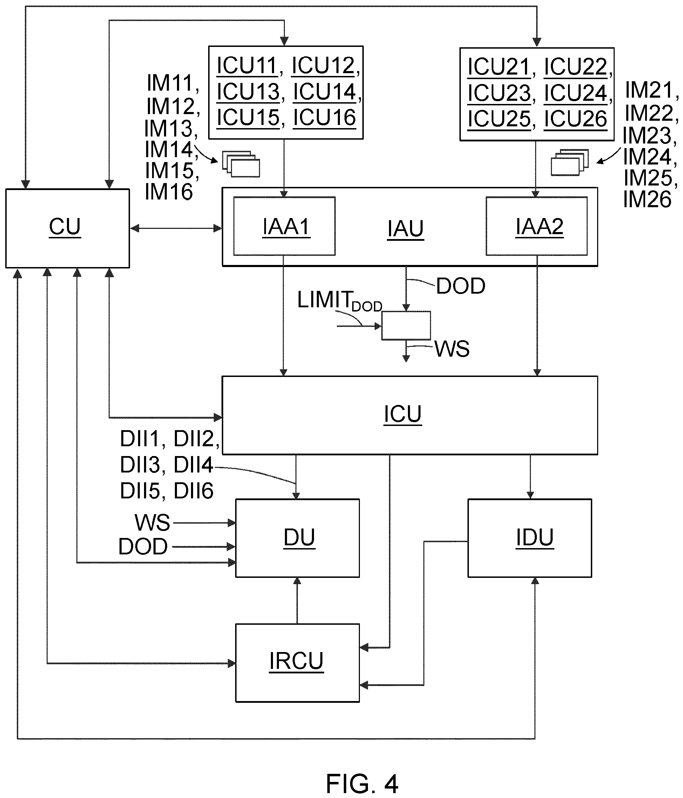

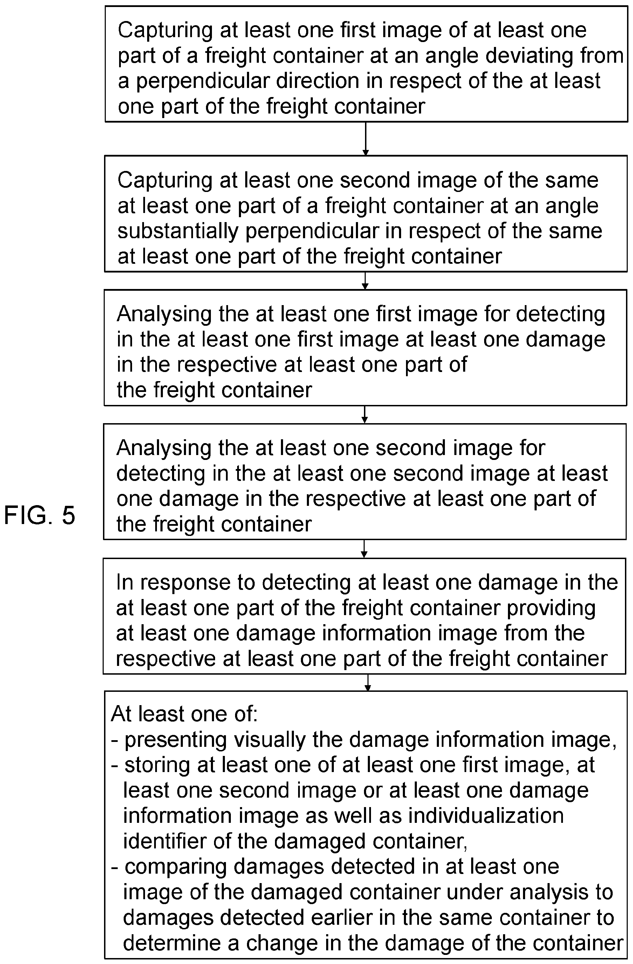

Figure 4 shows schematically an embodiment of a system for detecting damages in a freight container and Figure 5 shows schematically a corresponding embodiment of a method of detecting damages in a freight container.

The system comprises a number of first image capturing units ICU11, ICU12, ICU13, ICU14, ICU15, ICU16, i.e., at least one first image capturing unit for capturing at least one respective first image IM11, IM12, IM13, IM14, IM15, IM16 of at least one part of the freight container at an angle deviating from the perpendicular direction in respect of the respective at least one part of the freight container. According to an embodiment the at least one first image capturing unit ICU11, ICU12, ICU13, ICU14, ICU15, ICU16 is a camera, such as a line scan camera, an analog area scan camera, a digital area scan camera, a FullHD resolution camera or a camera of a mobile device such as a smartphone.

The system further comprises a number of second image capturing units ICU21, ICU22, ICU23, ICU24, ICU25, ICU26, i.e., at least one second image capturing unit for capturing at least one respective second image IM21, IM22, IM23, IM24, IM25, IM26 of the same at least one part of the freight container as the respective at least one first image capturing unit, but at the angle substantially perpendicular in respect of the same at least one part of the freight container. According to an embodiment the at least one second image capturing unit ICU21, ICU22, ICU23, ICU24, ICU25, ICU26 is a camera, such as a line scan camera. The at least one second image capturing unit may also be an analog area scan camera, a digital area scan camera, a FullHD resolution camera or a camera of a mobile device such as a smartphone.

In its minimum, the system for detecting damages in the freight container 10 comprises one first image capturing unit arranged to capture at least one first image of one part of the freight container 10 at the angle deviating from the perpendicular direction in respect of the respective part of the freight container 10, and one second image capturing unit arranged to capture at least one second image of the same part of the freight container 10 at the angle substantially perpendicular in respect of the same part of the freight container 10 as the first image capturing unit.

In practical configuration, the at least one first image capturing unit ICU11, ICU12, ICU13, ICU14, ICU15, ICU16 and the respective at least one second image capturing unit ICU21, ICU22, ICU23, ICU24, ICU25, ICU26 may be located in various locations in a port, a railway terminal, or a truck terminal. According to an embodiment, the image capturing units may be located at an entrance gate and/or an exit gate in the port or the railway or the truck terminal to capture images of the parts of freight containers bypassing the entrance and/or exit gate. According to another embodiment, the image capturing units may be located at a frame of a freight container handling device or at some other part forming part of the freight container handling device, such as at a spreader of the freight container handling device. Some examples of such freight container handling devices are for example different kind of quay cranes and straddle carriers. Furthermore, the image capturing unit may be attached to its location fixedly, or it may be able to turn about a turning axis and/or to move along a rail arranged at the location of the image capturing unit.

The system for detecting damages in the freight container further comprises at least one image analysis unit IAU for analysing the at least one first image IM11, IM12, IM13, IM14, IM15, IM16 for detecting in the at least one first image at least one damage in the respective at least one part of the freight container 10, as well as for analysing the at least one second image IM21, IM22, IM23, IM24, IM25, IM26 for detecting in the at least one second image at least one damage in the respective at least one part of the freight container 10. The image analysis unit IAU is arranged to receive the at least one first image and the at least one second image from the respective image capturing units. The images captured by the image capturing units may comprise data identifying the image capturing unit by which the image in question has been captured as well as a time instant when the image in question has been captured.

The image analysis unit IAU comprises at least one first image analysis application IAA1 configured to analyse the at least one first image IM11, IM12, IM13, IM14, IM15, IM16 for detecting in the at least one first image at least one damage in the respective at least one part of the freight container 10. According to an embodiment the image analysis unit IAU comprises only one first image analysis application IAA1 that is configured to analyse the images captured by each first image capturing unit ICU11, ICU12, ICU13, ICU14, ICU15, ICU16 available in the system for detecting in the captured images at least one damage in the at least one part of the freight container 10. In this case the first image analysis application IAA1 is common for all the first image capturing units ICU11, ICU12, ICU13, ICU14, ICU15, ICU16 in the system. According to another embodiment the image analysis unit IAU comprises two or more first image analysis applications IAA1 each of them being dedicated to a respective first image capturing unit ICU11, ICU12, ICU13, ICU14, ICU15, ICU16 in the system and configured to analyse the at least one first image IM11, IM12, IM13, IM14, IM15, IM16 captured by the respective first image capturing unit ICU11, ICU12, ICU13, ICU14, ICU15, ICU16 for detecting in the respective at least one first image at least one damage in the respective at least one part of the freight container 10.

The image analysis unit IAU further comprises at least one second image analysis application IAA2 configured to analyse at least one second image IM21, IM22, IM23, IM24, IM25, IM26 for detecting in the at least one second image at least one damage in the respective part of the freight container 10. According to an embodiment the image analysis unit IAU comprises only one second image analysis application IAA2 that is configured to analyse the images captured by each second image capturing unit ICU21, ICU22, ICU23, ICU24, ICU25, ICU26 available in the system for detecting in the captured images at least one damage in the at least one part of the freight container 10. In this case the second image analysis application IAA2 is common for all the second image capturing units ICU21, ICU22, ICU23, ICU24, ICU25, ICU26 in the system. According to another embodiment the image analysis unit IAU comprises two or more second image analysis applications IAA2 each of them being dedicated to a respective second image capturing unit ICU21, ICU22, ICU23, ICU24, ICU25, ICU26 in the system and configured to analyse the at least one second image IM21, IM22, IM23, IM24, IM25, IM26 captured by the respective second image capturing unit ICU21, ICU22, ICU23, ICU24, ICU25, ICU26 for detecting in the respective at least one second image at least one damage in the respective part of the freight container 10.

The one or more image analysis applications IAA1, IAA2 may be implemented with machine learning applications. According to an embodiment, the image analysis application IAA1, IAA2 may comprise a neural network-based application that is configured to detect in the captured images damages appearing in the freight container 10. When the neural network-based application is utilized, the neural network is taught by a teaching material to detect the damages in the freight containers. The teaching material comprises a set of example images taken from typical undamaged freight containers as well as from freight containers comprising different kind of damages. Different kind of neural networks or other machine learning applications, as well as methods for teaching the corresponding neural networks or other machine learning applications are generally known for a person skilled in the art of image processing. Therefore, a principle, structure, or operation of different kind of neural networks or other machine learning applications are not disclosed herein in more detail.

According to an embodiment, the first image analysis application IAA1 is configured to detect in the at least one first image IM11, IM12, IM13, IM14, IM15, IM16 at least one of scratch, protrusion, or depression in the part of the freight container 10. Thus, the first image analysis application IAA1, that is configured to analyse the at least one first image taken at an angle deviating from the perpendicular direction in respect of the respective part of the freight container, is specifically taught to detect in the at least one first image damages being detectable especially in an image taken at an angle deviating from the perpendicular direction in respect of the respective part of the freight container. The scratches, protrusions, or depressions, as well as a possibly open container door, represent kind of damages that typically are more easily detectable in images taken at an angle deviating from the perpendicular direction in respect of the respective part of the freight container than in images taken at an angle substantially perpendicular in respect of the same part of the freight container.

According to an embodiment, the image analysis unit IAU comprises a single first image analysis application IAA1 that is universal to analyse the images taken by all the first image capturing units ICU11, ICU12, ICU13, ICU14, ICU15, ICU16 despite of the number of the first image capturing units ICU11, ICU12, ICU13, ICU14, ICU15, ICU16 available in the system.

According to another embodiment, the image analysis unit IAU comprises a number of the first image analysis applications IAA1 corresponding to a number of the first image capturing units ICU11, ICU12, ICU13, ICU14, ICU15, ICU16 available in the system. This embodiment allows a dedicated first image analysis application IAA1 for each respective first image capturing unit ICU11, ICU12, ICU13, ICU14, ICU15, ICU16 in the system, thus allowing to configure properties of the respective first image analysis application IAA1 to take into account the properties of the respective first image capturing unit, such as intrinsic parameters of the respective first image capturing unit, an orientation angle of the respective first image capturing unit in respect of the respective part of the freight container or a range of the orientation angle of the respective first image capturing unit in respect of the respective part of the freight container in case of the respective first image capturing unit being turnable about a turning axis, or a distance of the respective first image capturing unit from the respective part of the freight container.

According to an embodiment, the second image analysis application IAA2 is configured to detect in the at least one second image IM21, IM22, IM23, IM24, IM25, IM26 at least one of small deformation, large deformation, hole, scratch, or rust in the part of the freight container 10. Thus, the second image analysis application IAA2, that is configured to analyse the at least one second image taken at an angle substantially perpendicular in respect of the respective part of the freight container, is specifically taught to detect in the at least one second image damages being detectable especially in an image taken at an angle substantially perpendicular in respect of the respective part of the freight container. The small and large deformations, holes, scratches, or rust represent kind of damages that typically are more easily detectable in images taken at an angle substantially perpendicular in respect of the respective part of the freight container than in images taken at an angle deviating from the perpendicular direction in respect of the same part of the freight container.

According to an embodiment, the image analysis unit IAU comprises a single second image analysis application IAA2 that is universal to analyse the images taken by all the second image capturing units ICU21, ICU22, ICU23, ICU24, ICU25, ICU26 despite of the number of the second image capturing units ICU21, ICU22, ICU23, ICU24, ICU25, ICU26 available in the system.

According to another embodiment, the image analysis unit IAU comprises a number of the second image analysis applications IAA2 corresponding to a number of the second image capturing units ICU21, ICU22, ICU23, ICU24, ICU25, ICU26 available in the system. This embodiment allows a dedicated second image analysis application IAA2 for each respective second image capturing unit ICU21, ICU22, ICU23, ICU24, ICU25, ICU26 in the system, thus allowing to configure properties of the respective second image analysis application IAA2 to take into account the properties of the respective second image capturing unit, such as intrinsic parameters of the respective second image capturing unit, or a distance of the respective second image capturing unit from the respective part of the freight container.

In response to not detecting any damage in any first image IM11, IM12, IM13, IM14, IM15, IM16 or in any second image IM21, IM22, IM23, IM24, IM25, IM26 captured from the freight container, the analysis for detecting damages in the respective freight container may be interrupted.

In response to detecting at least one damage in at least one second image IM21, IM22, IM23, IM24, IM25, IM26, the output of the image analysis unit IAU comprises at least the at least one damage detected in the at least one second image IM21, IM22, IM23, IM24, IM25, IM26, a location for each detected damage in the respective part of the freight container, as well as the at least one second image IM21, IM22, IM23, IM24, IM25, IM26 regarding to the part of the freight container wherein the at least one damage have been detected.

In response to detecting at least one damage in at least one first image IM11, IM12, IM13, IM14, IM15, IM16, the output of the image analysis unit IAU comprises at least the at least one damage detected in the at least one first image IM11, IM12, IM13, IM14, IM15, IM16, a location for each detected damage in the respective part of the freight container as well as the at least one second image IM21, IM22, IM23, IM24, IM25, IM26 regarding to the part of the freight container wherein the at least one damage have been detected even if no damage has been detected in any second image IM21, IM22, IM23, IM24, IM25, IM26.

In the event of the at least one of the at least one first image IM11, IM12, IM13, IM14, IM15, IM16 or the at least one second image IM21, IM22, IM23, IM24, IM25, IM26 comprising at least one damage detected in the respective at least one part of the freight container 10, at least one respective damage information image DII1, DII2, DII3, DII4, DII5, DII6 is provided by at least one image combination unit ICU in response to detecting at least one damage in the respective at least one part of the freight container. The damage information image DII is an image, wherein the second image IM21, IM22, IM23, IM24, IM25, IM26 regarding to the part of the freight container at which the at least damage has been detected provides a basic image and into which image the at least one damage detected in the respective first image IM11, IM12, IM13, IM14, IM15, IM16 is to be included into.

The damage information image DII is thus an image that includes or discloses damages of the freight container detected in at least one of the first image or the respective second image of the same part of the freight container. The damage information image DII1, DII2, DII3, DII4, DII5, DII6 is provided by such a combination of the first image and the respective second image of the same part of the freight container, wherein a basic image is provided by the second image captured from the part of the freight container, which second image is further supplemented with damages of the freight container detected in the respective first image of the same part of the freight container.

Thus, the basic image of the damage information image DII1, DII2, DII3, DII4, DII5, DII6 may be supplemented with an image part of the first image describing the damage of the freight container detected in the respective first image of the same part of the freight container in the event of the damage being not clearly visible in the respective second image forming the basic image of the damage information image DII1, DII2, DII3, DII4, DII5, DII6.

In the event of the freight container comprising damages being visible only in the first image captured from the part of the freight container, the damage information image DII1, DII2, DII3, DII4, DII5, DII6 will disclose the damages having only been detected in the respective first image.

In the event of the freight container comprising damages being visible only in the second image captured from the part of the freight container, the damage information image DII1, DII2, DII3, DII4, DII5, DII6 will disclose only the damages having only been detected in the respective second image.

In the event of the freight container comprising damages being visible both in the first image and in the second image captured from the same part of the freight container, the damage information image DII1, DII2, DII3, DII4, DII5, DII6 will disclose all the damages having been detected in the first image and all the damages having been detected in the second image.

According to an embodiment, the system for detecting damages of the freight container 10 further comprises at least one display unit DU for presenting visually the at least one damage information image DII1, DII2, DII3, DII4, DII5, DII6 in response to detecting at least one damage in the respective at least one part of the freight container. The damage information image DII1, DII2, DII3, DII4, DII5, DII6 may be presented visually to an operator of a port or terminal automatically in response to detecting at least one damage in the freight container for allowing the operator to possibly start actions relating to the further handling of the container, including for example specific manually implemented inspection of the container or even preventing the transport of the container.

According to an embodiment, the system comprises at least one image database unit IDU configured to store at least one of the at least one first image IM11, IM12, IM13, IM14, IM15, IM16, the at least one second image IM21, IM22, IM23, IM24, IM25, IM26 or the at least one damage information image DII1, DII2, DII3, DII4, DII5, DII6 of the at least one damaged part of the freight container 10 as well as an individualization identifier, such as the container code 7, of the damaged freight container 10 in response to detecting at least one damage in the respective at least one part of the freight container 10. The at least one image database unit IDU may comprise a number of, i.e., one or more, memory units configured to provide a database wherein the images related at least to the damaged part of the freight container 10 are stored for possible further utilization. The at least one of the at least one first image, the at least one second image or the at least one damage information image as well as an individualization identifier of the freight container may be stored to the at least one image database unit IDU for example from the image combination unit ICU.

According to an embodiment, the at least one image database unit IDU may be dedicated only to a specific single system for detecting damages, which specific single system is implemented for example in a single port, railway terminal or truck terminal.

According to an embodiment, the at least one image database unit IDU may provide a common database to two or more different systems for detecting damages, which different systems may for example be implemented in two or more different ports, railway terminals and/or truck terminals, respectively.

According to an embodiment, the system comprises at least one image retrieval and comparison unit IRCU configured to automatically retrieve from a group of images stored previously into the at least one image database unit IDU at least one of the at least one first image IM11, IM12, IM13, IM14, IM15, IM16, the at least one second image IM21, IM22, IM23, IM24, IM25, IM26 or the at least one damage information image DII1, DII2, DII3, DII4, DII5, DII6 of the same at least one part of the same freight container 10 in response to detecting at least one damage in the at least one part of the same freight container 10 presently under analysis. The previously stored images may be retrieved from the image database unit IDU for example based on the identified container code 7 of the freight container 10 under analysis.

The at least one image retrieval and comparison unit IRCU is further configured to automatically compare the at least one of the at least one first image IM11, IM12, IM13, IM14, IM15, IM16, the at least one second image IM21, IM22, IM23, IM24, IM25, IM26 or the at least one damage information image DII1, DII2, DII3, DII4, DII5, DII6 of the same at least one part of the same freight container 10 retrieved from the at least one image databased unit IDU to the respective at least one of the at least one first image IM11, IM12, IM13, IM14, IM15, IM16, the at least one second image IM21, IM22, IM23, IM24, IM25, IM26 or the at least one damage information image DII1, DII2, DII3, DII4, DII5, DII6 of the least one part of the freight container 10 presently under analysis for determining a change in the at least one damage in the freight container 10. The image retrieval and comparison unit IRCU may for example receive the previously stored at least one first image, the at least one second image and/or the at least one damage information image from the image database unit IDU and the at least one first image, the at least one second image or the at least one damage information image of the least one part of the freight container 10 presently under analysis from the image combination unit ICU.

According to this embodiment, the image retrieval and comparison unit IRCU is configured to determine the change having taken place in the at least one damage of the freight container 10 based on images captured or taken at different time instants. The change in the damage, such as a change in a degree of damage of the freight container 10 may be utilized for example for determining an estimated remaining operating life of the freight container 10. The information relating to the damage or the change in the damage may also be used to determine the time of appearance of the damage or the change in the degree of the damage and to identify a party who caused the damage as well as to solve responsibility and compensation issues related to the damage. The previously captured first, second and/or damage information image(s), the captured first, second and/or damage information image(s) presently under analysis and/or an image illustrating the change of damage between the previously captured image(s) and the captured image(s) presently under analysis may for example be transferred from the image retrieval and comparison unit IRCU to the display unit DU to be presented on the display of the display unit DU.

In the event of the image database unit IDU being dedicated only to a single system for detecting damages in a single port, railway terminal or truck terminal, the first and/or second image(s) presently under analysis or the respective damage information image may be compared only to the first and/or second image(s) or the respective damage information image provided earlier at the same port, railway terminal or truck terminal.

In the event of the image database unit IDU being common to two or more different systems implemented in two or more different ports, railway terminals and/or truck terminals, the first and/or second image(s) presently under analysis or the respective damage information image may also be compared to the first and/or second image(s) or the respective damage information image provided earlier by a system in use in a different port, railway terminal and/or truck terminal.

According to an embodiment for providing the damage information image DII1, DII2, DII3, DII4, DII5, DII6 based on the respective damaged part 1, 2, 3, 4, 5, 6 of the freight container 10, the damage of the freight container having been detected in the first image of the part of the freight container is projected by the image combination unit ICU into the respective second image when providing the damage information image DII1, DII2, DII3, DII4, DII5, DII6 from the respective part of the freight container.

According to this embodiment, when projecting the damage of the freight container having been detected in the first image IM11, IM12, IM13, IM14, IM15, IM16 of the part of the freight container into the respective second image IM21, IM22, IM23, IM24, IM25, IM26 for providing the respective damage information image DII1, DII2, DII3, DII4, DII5, DII6, the at least one first image IM11, IM12, IM13, IM14, IM15, IM16 and the respective at least one second image IM21, IM22, IM23, IM24, IM25, IM26 are analysed for finding at least one distinguishable non-damage related feature, i.e., a keypoint, in the images, the at least one distinguishable non-damage related feature or keypoint found in the at least one first image IM11, IM12, IM13, IM14, IM15, IM16 and in the respective at least one second image IM21, IM22, IM23, IM24, IM25, IM26 are compared to each other for finding at least one same distinguishable non-damage related feature or keypoint in the images, whereby the at least one same distinguishable non-damage related feature or keypoint forms in the at least one first image IM11, IM12, IM13, IM14, IM15, IM16 and in the respective at least one second image IM21, IM22, IM23, IM24, IM25, IM26 at least one corresponding keypoint, and the respective damage information image DII1, DII2, DII3, DII4, DII5, DII6 is provided by projecting into the at least one second image IM21, IM22, IM23, IM24, IM25, IM26 at least one damage of the freight container detected in the respective at least one first image IM11, IM12, IM13, IM14, IM15, IM16 based on the position of the at least one corresponding keypoint in the at least one first image IM11, IM12, IM13, IM14, IM15, IM16 and in the respective at least one second image IM21, IM22, IM23, IM24, IM25, IM26.

The at least one first image and the respective at least one second image are thus analysed for finding at least one distinguishable non-damage related feature in the images for proving the at least one corresponding keypoint in the images. This analysis for finding the corresponding keypoints may be based on finding similarities in the first image and the respective second image. The publication Hyeonwoo Noh, Andre Araujo, Jack Sim, Tobias Weyand, Bohyung Han: Large-Scale Image Retrieval with Attentive Deep Local Features, Computer Vision Foundation, 2017 IEEE International Conference on Computer Vision (ICCV) discloses one very applicable way to find the similarities in images. Herein the at least one distinguishable non-damage related feature, or keypoint, may for example comprise at least one corner of the part of the freight container and/or the container code being visible in the respective part of the freight container. Alternatively, the analysis for finding the corresponding keypoints may be based on finding predetermined non-damage relates features or keypoints in the images, such as the at least one corner of the part of the freight container. In both of these ways to find corresponding keypoints a rotation and/or transfer of a view in one image relative to a view in the other image may be applied, as well as other information available relating to the capturing of the images, such as known locations of the respective image capturing units, determined speed and/or measures of the vehicle transporting the freight containers, and times at which the images were captured.

After the common counterpoints are found in the images, a geometrical transformation, such as homography" affine transformation, or isometry, may be determined between the first image and the respective second image. After determining this geometrical transformation, the damages detected in the first image may be projected into the respective second image that provides the basic image for the respective damage information image DII1, DII2, DII3, DII4, DII5, DII6.

The analysis of the at least one first image IM11, IM12, IM13, IM14, IM15, IM16 and the respective at least one second image IM21, IM22, IM23, IM24, IM25, IM26 to find at least one common distinguishable non-damage related feature or keypoint in the images for determining the at least one corresponding keypoint in the images and the geometrical transformation between the images may be implemented in the image analysis unit IAU, either as part of the respective image analysis applications or as a separate application.

The actual projecting of the damage detected in the first image into the second image forming the basic image for the respective damage information image DII1, DII2, DII3, DII4, DII5, DII6 takes place in the image combination unit ICU. For implementing this the image combination unit ICU will receive necessary information describing the damage detected in the at least one first image IM11, IM12, IM13, IM14, IM15, IM16, the location of the damage detected in the at least one first image IM11, IM12, IM13, IM14, IM15, IM16 and the geometrical transformation between the first image IM11, IM12, IM13, IM14, IM15, IM16 and the respective second image IM21, IM22, IM23, IM24, IM25, IM26. The location of the damage in the part of the freight container and having been detected in the first image IM11, IM12, IM13, IM14, IM15, IM16 may be expressed for example with image pixel coordinates in the first image as determined relative to the at least one corresponding keypoint found in the first image IM11, IM12, IM13, IM14, IM15, IM16 and in the respective second image IM21, IM22, IM23, IM24, IM25, IM26.

According to an embodiment, the system for detecting damages in the freight container is arranged to indicate the at least one damage in the part of the freight container by at least one visually perceptible sign in the damage information image. The visually perceptible sign may for example be a textual description of the damage. This visually perceptible sign may be linked to the damage for example in the image analysis unit IAU and supplied as an input into the image combination unit ICU.

According to an embodiment, the system for detecting damages in the freight container is arranged to determine a degree of damage DOF of the damaged part of the freight container and that in response to the degree of damage DOD exceeding a predetermined limit value LIMIT_{DOD} set for the degree of damage DOF the system is configured to provide a warning signal WS with one or more different implementations, such as visual or audible, indicating a possible need to interrupt the transportation of the freight container. The degree of damage DOD of the freight container may for example be determined in the image analysis unit IAU. The determined degree of damage DOD and/ or the warning signal WS may also be displayed in a display of the display unit DU together with the damage information image.

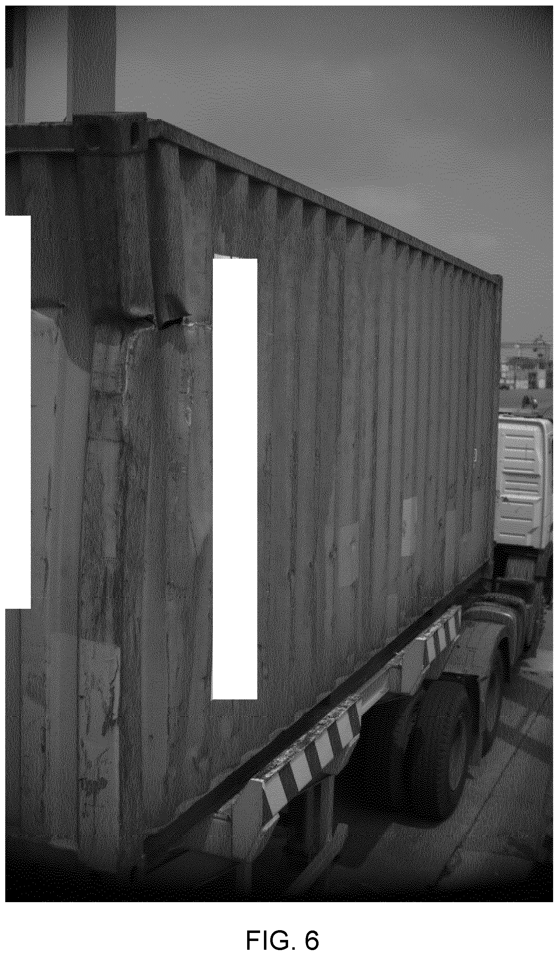

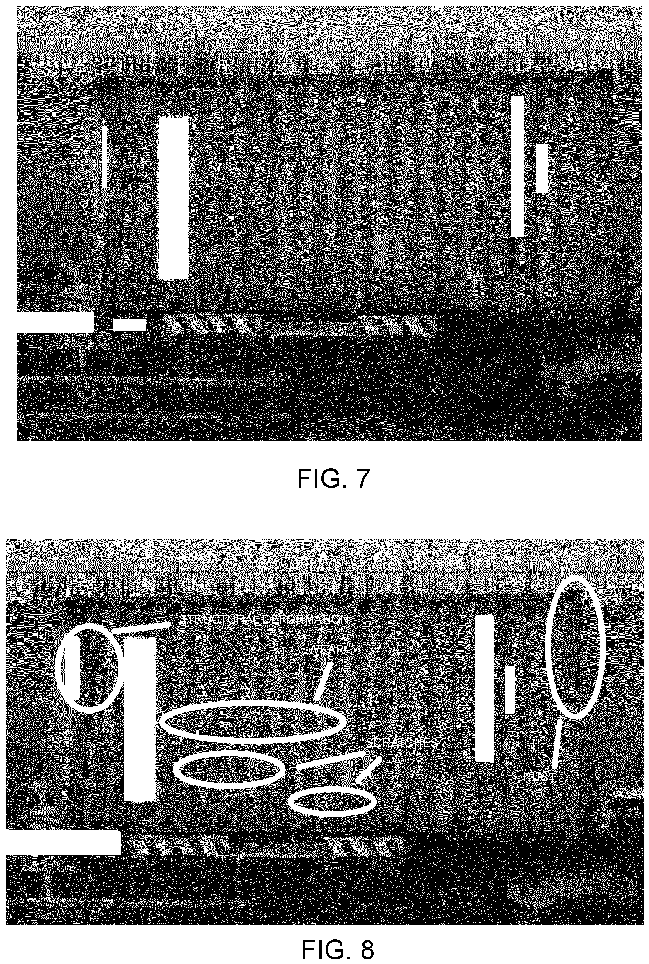

Figures 6 to 8 show schematically a practical example of detecting damages of a freight container. Figure 6 is an image captured from a side wall of the freight container obliquely towards the side wall of the freight container. Referring to Figure 2 the image of Figure 6 may be considered be captured with the first image capturing unit ICU13. Figure 7 is an image captured from the same side wall of the freight container perpendicularly towards the side wall of the freight container. Referring to Figure 2 the image of Figure 7 may be considered be captured with the second image capturing unit ICU23. Figure 8 is a damage information image formed as a combination of Figures 6 and 7, wherein the basic image is provided by the image of Figure 7, disclosing the damages having been detected in this image, this image being further supplemented with damages having been detected in the image of Figure 6. The detectable damages in the image of Figure 6 are especially the scratches in the lower middle part of the freight container. The detectable damages in the image of Figure 7 are especially the structural deformation close to the upper left-hand corner of the freight container, the hole close to the upper left-hand corner of the freight container and the rust close to the upper right-hand corner of the freight container. The hole close to the upper left-hand corner of the freight container may also be detectable in the image of Figure 6. Figure 8 has further been supplemented with textual descriptions describing the detected damages. Boxes filled with white colour are herein included in the images afterwards only for preventing the identification of the specific freight container or the vehicle carrying the freight container in this example.

The solution described herein allows to detect various damages of the freight container in at least one part of the freight container, including damages being detectable only in the image captured at the angle deviating from the perpendicular direction in respect of the part of the freight container as well as damages being detectable only in the image captured at the angle substantially perpendicular in respect of the same part of the freight container.

According to an embodiment, in the event of the at least one of the at least one first image IM11, IM12, IM13, IM14, IM15, IM16 or the at least one second image IM21, IM22, IM23, IM24, IM25, IM26 comprising at least one damage detected in the respective at least one part of the freight container 10, at least one respective damage information image DII1, DII2, DII3, DII4, DII5, DII6 is provided by at least one image combination unit ICU in response to detecting at least one damage in the respective at least one part of the freight container, wherein the damage information image DII is an image, wherein the first image IM11, IM12, IM13, IM14, IM15, IM16 regarding to the part of the freight container at which the at least damage has been detected provides a basic image and into which image the at least one damage detected in the respective second image IM21, IM22, IM23, IM24, IM25, IM26 is to be included into. According to this embodiment, the image analysis unit is configured to analyse the at least one first image and the at least one second image for finding at least one distinguishable non-damage related feature in the images, to compare the at least one distinguishable non-damage related feature found in the at least one first image and in the at least one second image to each other for finding at least one same distinguishable non-damage related feature in the at least one first image and in the at least one second image, whereby the at least one same distinguishable non-damage related feature forms in the at least one first image and in the at least one second image at least one corresponding keypoint, and the image combination unit is configured to project into the at least one first image at least one damage of the freight container detected in the at least one second image based on the location of the at least one corresponding keypoint in the at least one first image and in the at least one second image.

The system for detecting damages of the freight container 10 further comprises at least one control unit CU for controlling operation of the system for detecting damages in the freight container 10. The at least one control unit CU may thus control the operation of the at least one image capturing unit ICU11, ICU12, ICU13, ICU14, ICU15, ICU16, ICU21, ICU22, ICU23, ICU24, ICU25, ICU26, for example by controlling a timing of capturing the at least one image by the at least one image capturing unit, or by controlling an orientation and/or location of the at least one image capturing unit in respect of the at least one part of the freight container.

The at least one control unit CU may also control the operation of the image analysis unit IAU and image analysis applications therein, the operation of the image combination unit ICU, the operation of the display unit DU, the operation of the image database unit IDU, and the operation of the image retrieval and comparison unit IRCU.

The control connections between the control unit CU and the other units are shown in Figure 4 very schematically by arrowhead lines between the units. These control connections may be wired or wireless data control connections. The control connection between the control unit CU and another unit may be unidirectional, in which case the control unit CU may only control the operation of another unit but is not able to receive any state information from that other unit. Alternatively, the control connection between the control unit CU and another unit may be bidirectional, in which case the control unit CU may both control the operation of that other unit and is also able to receive state information from that other unit.

The control unit CU comprises a data processing unit, such as a microprocessor, that can execute a computer program product comprising executable code that when executed, cause the control operations for controlling the operation of the system for detecting damages of the freight container. The control unit CU may be a control unit dedicated only to the system for detecting damages of the freight container, or the control unit CU may be a part of a higher-level control system, such as a part of a production control system of a port or terminal wherein freight containers are handled.

The image analysis unit IAU and image analysis applications therein, the image combination unit ICU, the image retrieval and comparison unit IRCU, or the functionalities thereof may be implemented in one or more dedicated data processing means, that can execute a computer program product comprising executable code that when executed, cause the respective operations for detecting damages in the freight container. Alternatively, the image analysis unit IAU and image analysis applications therein, the image combination unit ICU, the image retrieval and comparison unit IRCU, or the functionalities thereof may be embedded into the control unit CU.

The method and system disclosed above is intended to detect especially damages in the freight containers. The disclosed method and system may also be applied for detecting containers which deviate in their size or structure from ordinary freight containers. Such containers include for example oversized containers or out-of-gauge containers whose at least one dimension, i.e., a length, width and/or height thereof deviates from dimensions defined in standards for the freight containers, or containers comprising structural deviations in the structure thereof, such as parts of cooling apparatus external to the container in cooling containers.

Oversized containers may cause dangerous situations in traffic outside ports or terminals, or in connection with passing through gate structures in the ports or terminals when such a container is on a truck trailer or a railway carriage. Therefore, such containers could be identified for being able to plan beforehand, if necessary, an alternative transport route and/or an intermediate storing place in the port or terminal or outside it. Relating to measures of the freight containers, for example, ISO 668 -standard relates to external and internal dimensions of containers. Additionally, when handling and storing containers deviating in their structure from ordinary freight containers, such as the cooling containers equipped with cooling apparatus, the deviating structures in the containers could be taken into consideration to prevent the containers from being stored or loaded in a space where the structures of the container might be damaged.

It will be obvious to a person skilled in the art that, as the technology advances, the inventive concept can be implemented in various ways. The invention and its embodiments are not limited to the examples described above but may vary within the scope of the claims.

## Claims

1. A method of detecting damages in a freight container, the method comprising
capturing at least one first image of at least one part of the freight container at an angle deviating from a perpendicular direction in respect of the at least one part of the freight container,
capturing at least one second image of the same at least one part of the freight container at an angle substantially perpendicular in respect of the same at least one part of the freight container,
analysing the at least one first image for detecting in the at least one first image at least one damage in the respective at least one part of the freight container,
analysing the at least one second image for detecting in the at least one second image at least one damage in the respective at least one part of the freight container,
in response to detecting at least one damage in the at least one part of the freight container providing at least one damage information image regarding to the respective at least one part of the freight container, the damage information image being an image based on the second image regarding to the respective part of the freight container and including damages detected in at least one of the respective first image or this second image.

2. A method as claimed in claim 1, **characterized by**
presenting visually the at least one damage information image in response to detecting at least one damage in the respective at least one part of the freight container.

3. A method as claimed in claim 1 or 2, **characterized by**
storing at least one of the at least one first image, the at least one second image or the at least one damage information image of the at least one part of the freight container as well as an individualization identifier of the freight container in response to detecting at least one damage in the respective at least one part of the freight container.

4. A method as claimed in any one of the preceding claims, **characterized by**
retrieving from a group of images stored previously at least one of the at least one first image, the at least one second image or the at least one damage information image of the same at least one part of the same freight container in response to detecting at least one damage in the at least one part of the freight container under analysis, and
comparing the previously stored at least one of the at least one first image, the at least one second image or the at least one damage information image of the same at least one part of the same freight container to the respective at least one of the at least one first image, the at least one second image or the at least one damage information image of the at least one part of the freight container under analysis for determining a change in the at least one damage in the freight container.

5. A method as claimed in any one of the preceding claims, **characterized by**
projecting at least one damage detected in the first image into the respective second image when providing the damage information image from the respective part of the freight container.

6. A method as claimed in claim 5, **characterized by**
analysing the at least one first image and the at least one second image for finding at least one distinguishable non-damage related feature in the images,
comparing the at least one distinguishable non-damage related feature found in the at least one first image and in the at least one second image to each other for finding at least one same distinguishable non-damage related feature in the at least one first image and in the at least one second image, whereby the at least one same distinguishable non-damage related feature forms in the at least one first image and in the at least one second image at least one corresponding keypoint, and
to provide the damage information image, projecting into the at least one second image at least one damage of the freight container detected in the at least one first image based on the position of the at least one corresponding keypoint in the at least one first image and in the at least one second image.

7. A method as claimed in any one of the preceding claims, **characterized by**
indicating in the damage information image the at least damage in the part of the freight container by at least one visually perceptible sign.

8. A system for detecting damages in a freight container, the system comprising
at least one first image capturing unit for capturing at least one first image of at least one part of the freight container at an angle deviating from a perpendicular direction in respect of the at least one part of the freight container,
at least one second image capturing unit for capturing at least one second image of the same at least one part of the freight container at an angle substantially perpendicular in respect of the same at least one part of the freight container,
at least one image analysis unit for analysing the at least one first image and the at least one second image to detect in at least one of the at least one first image or the at least one second image at least one damage in the respective at least one part of the freight container,
at least one image combination unit configured to provide at least one damage information image regarding to the respective at least one part of the freight container in response to the detection of at least one damage in the at least one part of the freight container, the damage information image being an image based on the second image regarding to the respective part of the freight container and including damages detected in at least one of the respective first image or this second image.

9. A system as claimed in claim 8, **characterized in that**
the system comprises at least one display unit for presenting visually the at least one damage information image in response to detecting at least one damage in the respective at least one part of the freight container.

10. A system as claimed in claim 8 or 9, **characterized in that**
the system comprises at least one image database unit configured to store at least one of the at least one first image, the at least one second image or the at least one damage information image of the at least one part of the freight container as well as an individualization identifier of the freight container in response to detecting at least one damage in the respective at least one part of the freight container.

11. A system as claimed in any one of preceding claims 8 to 10, **characterized in that**
the system comprises at least one image retrieval and comparison unit configured to retrieve from a group of images stored previously at least one of the at least one first image, the at least one second image or the at least one damage information image of the same at least one part of the freight container in response to detecting at least one damage in the at least one part of the freight container under analysis, and
to compare the previously stored at least one of the at least one first image, the at least one second image or the at least one damage information image of the same at least one part of the freight container to the respective at least one of the at least one first image, the at least one second image or the at least one damage information image of the at least one part of the freight container under analysis for determining a change in the at least one damage in the freight container.

12. A system as claimed in any one of the preceding claims 8 to 11, **characterized in that**
the image combination unit is configured to project at least one damage detected in the first image into the respective second image to provide the damage information image from the respective part of the freight container.

13. A system as claimed in any one of preceding claims 8 to 12, **characterized in that**
the image analysis unit is configured to
analyse the at least one first image and the at least one second image for finding at least one distinguishable non-damage related feature in the images,
to compare the at least one distinguishable non-damage related feature found in the at least one first image and in the at least one second image to each other for finding at least one same distinguishable non-damage related feature in the at least one first image and in the at least one second image, whereby the at least one same distinguishable non-damage related feature forms in the at least one first image and in the at least one second image at least one corresponding keypoint, and
the image combination unit is configured to project into the at least one second image at least one damage of the freight container detected in the at least one first image based on the location of the at least one corresponding keypoint in the at least one first image and in the at least one second image.

14. A system as claimed in any of preceding claims 8 to 13, **characterized in that** the at least one analysis unit is configured to detect in the at least one first image at least one different kind of damage than in the at least one second image.

15. A system as claimed in any one of preceding claims 8 to 14, **characterized in that** the system is configured to detect in the at least one first image at least one of scratch, protrusion, or depression in the part of the freight container, and in the at least one second image at least one of deformation, hole, scratch, or rust in the part of the freight container.
